**Europäisches Patentamt**

**European Patent Office**

**Office européen des brevets**

(19)

(11) Veröffentlichungsnummer : **0 037 362**
**B1**

(12) **EUROPÄISCHE PATENTSCHRIFT**

(45) Veröffentlichungstag der Patentschrift :
**29.02.84**

(21) Anmeldenummer : **81730021.3**

(22) Anmeldetag : **21.02.81**

(51) Int. Cl.³ : **G 06 F 11/18, G 05 B 9/03,**
**H 04 L 1/22, B 61 L 27/00**

---

(54) **Anordnung zur gesicherten Datenausgabe.**

---

(30) Priorität : **26.03.80 DE 3012159**

(43) Veröffentlichungstag der Anmeldung :
**07.10.81 Patentblatt 81/40**

(45) Bekanntmachung des Hinweises auf die Patenterteilung : **29.02.84 Patentblatt 84/09**

(84) Benannte Vertragsstaaten :
**AT BE CH DE FR GB IT LI LU NL**

(56) Entgegenhaltungen :
**DD-A- 98 577**
**DE-A- 1 115 484**
**DE-A- 2 030 760**
**DE-A- 2 502 764**
**DE-A- 2 655 653**
**DE-A- 2 907 333**
**DE-B- 2 023 117**
**DE-B- 2 260 738**
**US-A- 3 091 753**
**Siemens Zeitschrift 48 (1974), Heft 7, S. 490-494**

(73) Patentinhaber : **Licentia Patent-Verwaltungs-GmbH**
**Theodor-Stern-Kai 1**
**D-6000 Frankfurt/Main 70 (DE)**

(72) Erfinder : **Lotz, Alfred, Ing. grad.**
**Büchsenweg 14**
**D-1000 Berlin 51 (DE)**
Erfinder : **Brauer, Harri, Dipl.- Ing.**
**Theodorstrasse 1**
**D-1000 Berlin 42 (DE)**

(74) Vertreter : **Lertes, Kurt, Dr. et al**
**Licentia Patent-Verwaltungs-GmbH Theo-**
**dor-Stern-Kai 1**
**D-6000 Frankfurt/M 70 (DE)**

Anordnung zur gesicherten Datenausgabe

Die Erfindung betrifft eine Anordnung zur gesicherten Datenausgabe nach dem Oberbegriff des Anspruchs 1. Eine solche Anordnung ist beispielsweise aus DE-A-2 502 764 bekannt.

Zur Steuerung automatisierter Prozesse werden in zunehmendem Maße elektronische Einrichtungen eingesetzt. Insbesondere gehören dazu auch Prozeßrechner und Mikrocomputer.

Besondere Schaltwerke mit Sicherheitsverantwortung werden auf dem Gebiet der Eisenbahnsicherungstechnik eingesetzt, von deren einwandfreien Arbeiten die Sicherheit bei der Bahnautomatisierung abhängt.

Um die geforderten Sicherheitsbedingungen erfüllen zu können, werden zweikanalige Steuerungen verwendet, in denen die Signale parallel übertragen werden und auf Äquivalenz oder Antivalenz geprüft werden. Da hierbei trotzdem noch falsche Signale abgegeben werden können, die unzulässige Handlungen auslösen können, wurden fail-safe-Systeme entwickelt, mit deren Hilfe es möglich ist, die Auslösung fehlerhafter Befehle zu verhindern ; vgl. DE-A-20 23 117, DE-A-25 02 764 und Siemens Zeitschrift 48 (1974), Heft 7, S. 490-494. Würden jedoch alle Baugruppen eines solchen Datenübertragungssystems aus fail-safe-Moduln aufgebaut werden, so würde der Aufwand sehr groß werden.

Aus DE-A-11 15 484 und US-A 30 91 753 ist es bekannt, ausgegebene Information zur Fehlererkennung unter Rückdekodierung wieder mit der ursprünglichen Information zu vergleichen. Die Aufgabe besteht daher darin, mittels herkömmlicher und fail-safe-Baugruppen sichere Prozeßausgaben zu realisieren, wie sie für die Eisenbahnsignaltechnik gefordert werden.

Die Aufgabe wird nach der Erfindung durch die im Anspruch 1 angegebenen Maßnahmen gelöst.

Weiterbildung der Erfindung ist im Unteranspruch gekennzeichnet.

Die Erfindung wird im folgenden an einem Ausführungsbeispiel durch Zeichnungen näher erläutert.

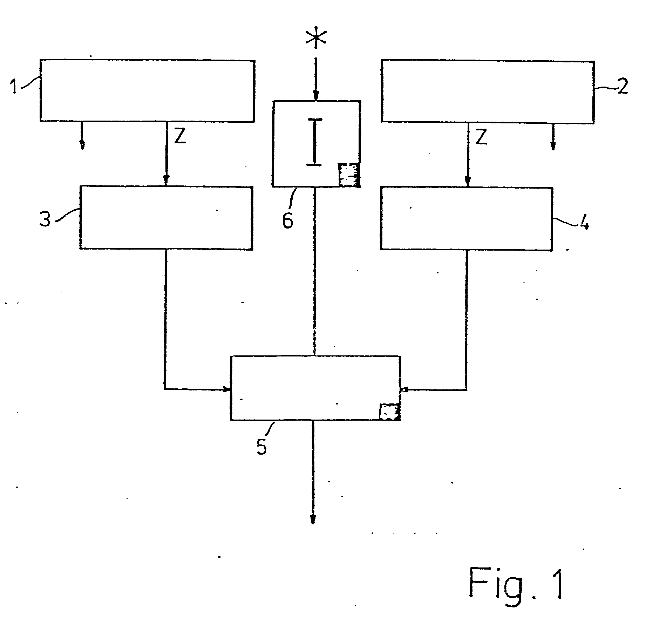

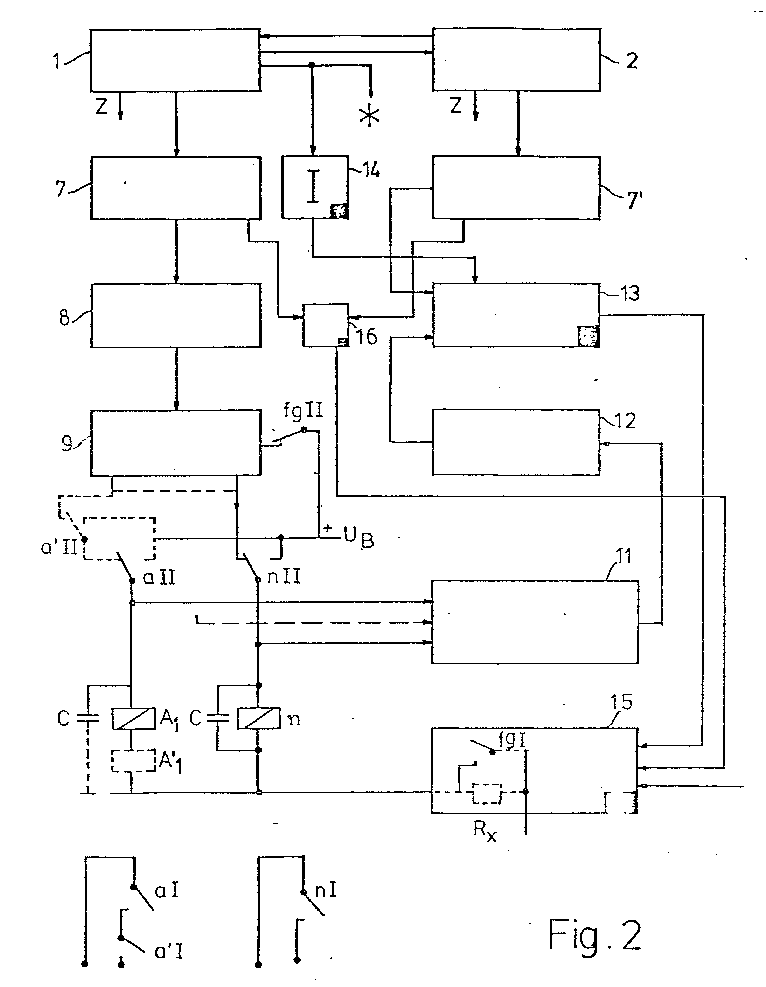

In zwei Datenverarbeitungskanälen 1, 2 werden dieselben Daten übertragen. Jedes übertragene Datentelegramm besitzt eine Adresse. Die Adressen werden in Speicher 3, 4 gegeben, wie aus Fig. 1 zu ersehen ist. In einem fail-safe-Vergleicher 5 werden sie verglichen. Gesteuert wird der fail-safe-Vergleicher 5 von einem fail-safe-Mono-Flop-Impulsgeber 6. Die Daten werden in Speicher 7 und 7' eingegeben, wie in Fig. 2 dargestellt. An den Speicher 7 ist ein Decodierer 8 angeschlossen und an diesen ein Ausgabeverstärker 9. Dieser ist über einen Rückcodierer 11 und einen Zwischenspeicher 12 mit einem fail-safe-Vergleicher 13 verbunden. Der fail-safe-Vergleicher 13 wird von einem fail-safe-Mono-Flop-Impulsgeber 14 gesteuert und vergleicht die rückcodierten Daten des Datenverarbeitungskanals 1 mit den Originaldaten des Datenverarbeitungskanals 2. An den fail-safe-Vergleicher 13 ist eine Freigabeschaltung 15 angeschlossen, die auch mit dem fail-safe-Vergleicher 5 verbunden ist. Mit den Speichern 7 und 7' sowie der Freigabeschaltung 15 ist ein weiterer fail-safe-Vergleicher 16 zur Erhöhung der Sicherheit verbunden.

Die in den Datenverarbeitungskanälen 1, 2 enthaltenen Daten werden zunächst zwischengespeichert. Vom Speicher 7 des Kanals 1 werden die Daten decodiert und dem nachfolgenden Ausgabeverstärker 9 zugeführt. Ein Relais Fg in der Freigabeschaltung 15, das je Telegramm nach richtig erfolgtem Vergleich ansprechen muß, läßt zunächst über einen hochohmigen Widerstand $R_x$ das entsprechende Ausgangsrelais $A_1$-n nicht anziehen, so daß dieses Ausgaberelais noch nicht ansprechen kann. Eine Rückcodierung bildet aus den Verstärkerinformationen der Ausgabe wieder ein Vergleichstelegramm, das dasselbe Bitmuster haben muß wie das Originaltelegramm im Datenverarbeitungs-Kanal 1 und im Datenverarbeitungs-Kanal 2. Die beiden Telegramme (rückcodiertes Telegramm vom Datenverarbeitungs-Kanal 1 und Original Telegramm vom Datenverarbeitungs-Kanal 2) werden einem fail-safe-Vergleicher 13 zugeführt und entweder parallel oder seriell auf Übereinstimmung verglichen. Ein Vergleich zwischen den Original-Telegrammen in den Datenverarbeitungs-Kanälen 1 und 2 wird darüberhinaus in dem fail-safe-Vergleicher 16 durchgeführt und das Ergebnis in die Freigabeschaltung 15 gegeben. Nach richtig erfolgtem Vergleich schaltet die Freigabeschaltung 15 die Spannung (O-Potential) zu Relais $A_1$ bis n durch. Das entsprechend angesteuerte Relais (in Übereinstimmung mit der Rückcodierung) kann ansprechen. Mit seinem Kontakt I wird die Ausgabe zum Prozeß (Stellglieder) vorgenommen, der Umschalt-Kontakt II schaltet den Verstärkerausgang vom Relais ab und die Versorgungsspannung + $U_B$ an das Relais an. Kondensatoren C, die parallel zur Wicklung liegen, sollen die Umschaltzeit der Kontakte II überbrücken. Relais Fg bleibt solange angezogen, bis die Freigabeschaltung 15 das gemeinsame O-Potential der Relais wieder hochohmig schaltet.

Mit einem Kontakt fg II wird etwas verzögert die positive Versorgungsspannung für den Ausgabeverstärker 9 abgeschaltet. Damit wird verhindert, daß Defekte in Ausgabeverstärkern zusätzliche Ausgaberelais zum Ansprechen bringen.

Die Relais $A_1$ bis n müssen so beschaffen sein, daß Öffner und Schließer nicht gleichzeitig geschlossen sein können. Die für die Versorgungsspannungsumschaltung benötigten Elemente können auch durch elektronische Schaltkreise mit fail-safe-Eigenschaften realisiert werden.

Zur Verbesserung der Sicherheit bei Verwendung von Relais mit zwangsgeführten Kontakten kann ein weiteres Relais $A'_1$ zum Relais $A_1$ in Reihe geschaltet werden. Die Ausgabekontakte al und a'l der beiden Relais müssen hintereinandergeschaltet werden. Ebenso müssen die Kontakte all und a'll zur Überwachung hintereinandergeschaltet werden.

Mit dieser Anordnung soll verhindert werden, daß durch einen Fehler im Datenverarbeitungs-Kanal 1 ein weiteres Relais ansprechen kann, wenn die Vergleichsprüfung schon abgeschlossen ist.

Das Kleben eines Kontaktes wird durch die Vergleichsprüfung bemerkt. Dies hat zur Folge, daß die Freigabeschaltung die Ausgabeverstärker nicht scharf schaltet.

Die Anordnung nach der Erfindung hat den Vorteil, daß für die gesicherte Datenausgabe weitgehend konventionelle Baugruppen verwendet werden können und daß trotzdem eine Ausgabe von falschen Telegrammen mit Sicherheit verhindert werden kann.

**Ansprüche**

1. Anordnung zur gesicherten Datenausgabe mittels Relais in redundanten zweikanaligen Prozeßsteuerungen mit Vergleich und unter Verwendung von fail-safe-Schaltung, gekennzeichnet durch zwei Datenverarbeitungskanäle (1, 2) zur Übertragung gleicher, Adressen und Ausgabedaten enthaltender Datentelegramme, denen jeweils ein Speicher (3, 4) für die Speicherung der Adressen zugeordnet ist, mit einem ersten fail-safe-Vergleicher (5), der von einem fail-safe-Mono-Flop-Impulsgeber (6) gesteuert die Adressen vergleicht, mit jeweils einem Speicher (7, 7') für jeden Datenverarbeitungskanal zur Speicherung der Ausgabedaten, deren Inhalte durch einen zweiten fail-safe-Vergleicher (16) verglichen werden, einem mit dem einen Speicher (7) über einen Decodierer (8) verbundenen Ausgabeverstärker (9), an den die zu steuernden Relais (A₁, n) angeschlossen sind, einem Rückcodierer (11), der die Ausgabedaten vom Ausgabeverstärker (9) erhält und sie über einen Speicher (12) zur Speicherung der Vergleichsdaten einem dritten fail-safe-Vergleicher (13) zuleitet, der die Vergleichsdaten mit den Ausgabedaten des zweiten Datenverarbeitungskanals (2) vergleicht und von einem vom ersten Datenverarbeitungskanal beaufschlagten fail-safe-Mono-Flop-Impulsgeber (14) gesteuert wird und daß die fail-safe-Freigabeschaltung (15) mit dem ersten, zweiten und dritten fail-safe-Vergleicher (5, 16, 13) verbunden ist.

2. Anordnung nach Anspruch 1, dadurch gekennzeichnet, daß die fail-safe-Freigabeschaltung (15) bei jedem Telegramm wirksam wird.

**Claims**

1. Arrangement for the protected data output by means of relays in redundant two-channel process controls with comparisons and with the use of fail-safe circuitry, characterised by two data processing channels (1, 2) for the transmission of like data telegrams containing addresses and output data, each channel being associated with a respective store (3, 4) for the storage of the addresses, with a first fail-safe comparator (5), which being controlled by a fail-safe mono-flop pulse transmitter (6) compares the addresses, with a respective store (7, 7') for each data processing channel for the storage of the output data, the contents of which are compared by a second fail-safe comparator (16), an output amplifier (9), which is connected through a decoder (8) with the one store (7) and to which the relays (A₁, n) to be controlled are connected, a recoder (11), which receives the output data from the output amplifier (9) and conducts them through a store (12) for the storage of the comparison data to a third fail-safe comparator (13), which compares the comparison data with the output of the second data processing channel (2) and is controlled by a fail-safe mono-flop pulse transmitter (14) acted on by the first data processing channel, and that the fail-safe clearing circuit (15) is connected with the first, second and third fail-safe comparator (5, 16, 13).

2. Arrangement according to claim 1, characterised thereby, that the fail-safe clearing circuit (15) becomes effective for each telegram.

**Revendications**

1. Montage de sortie protégée de données à l'aide de relais, dans des commandes de processus bicanaux redondantes avec comparaison et utilisation d'un circuit à sûreté intégrée, ledit montage étant caractérisé par deux canaux de traitement de l'information (1, 2) transmettant des télégrammes de données identiques, contenant adresses et données de sortie, avec une mémoire (3, 4) affectée à chaque canal pour la mémorisation des adresses, un premier comparateur à sûreté intégrée (5) qui, commandé par un émetteur d'impulsions (6) à bascule monostable et sûreté intégrée, compare les adresses, une mémoire (7, 7') affectée à chaque canal de traitement de l'information pour mémorisation des données de sortie et dont les contenus sont comparés par un second comparateur à sûreté intégrée (16), un amplificateur de sortie (9) relié par un décodeur (8) à une mémoire (7) et aux relais (A₁, n) à commander, un décodeur inverse (11), qui reçoit les données de l'amplificateur de sortie (9) puis les transmet, par l'intermédiaire d'une mémoire (12) de stockage des données à comparer, à un troisième comparateur à sûreté intégrée (13), qui compare les données à comparer aux données de sortie du second canal de traitement de l'information (2) et est commandé par un émetteur d'impulsions (14) à bascule monostable et à sûreté intégrée, alimenté par le premier canal de traitement de l'information ; et le circuit d'autorisation à sûreté intégrée (15) est relié au premier, au second et au troisième comparateur à sûreté intégrée (5, 16, 13).

2. Montage selon revendication 1, caractérisé en ce que le circuit d'autorisation à sûreté intégrée (15) intervient à chaque télégramme.

Fig. 1

Fig.2